(19) Europäisches Patentamt
European Patent Office
Office européen des brevets

(11) **EP 2 158 544 B1**

(12) **EUROPEAN PATENT SPECIFICATION**

(45) Date of publication and mention
of the grant of the patent:
**08.08.2012 Bulletin 2012/32**

(51) Int Cl.:
***G06F 13/16*** (2006.01)

(21) Application number: **08770821.0**

(22) Date of filing: **12.06.2008**

(86) International application number:
**PCT/US2008/066690**

(87) International publication number:
**WO 2008/154625 (18.12.2008 Gazette 2008/51)**

(54) **IN-DRAM CYCLE-BASED LEVELIZATION**

ZYKLUSBASIERTE IN-DRAM-NIVELLIERUNG

MISE À NIVEAU FONDÉE SUR DES CYCLES DANS DRAM

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **12.06.2007 US 934446 P**

(43) Date of publication of application:
**03.03.2010 Bulletin 2010/09**

(60) Divisional application:
**11184468.4 / 2 410 436**

(73) Proprietor: **Rambus Inc.
Sunnyvale, CA 94089 (US)**

(72) Inventors:
• **CLINE, Julia, V. M.**
**Sunnyvale, CA 94089 (US)**
• **HO, Eugene, C.**
**Sunnyvale, CA 94089 (US)**
• **STOTT, Bret, G.**
**Sunnyvale, CA 94089 (US)**
• **WARE, Frederick, A.**
**Sunnyvale, CA 94089 (US)**

(74) Representative: **Eisenführ, Speiser & Partner
Johannes-Brahms-Platz 1
20355 Hamburg (DE)**

(56) References cited:
**WO-A-02/23358        WO-A-02/073619
US-A1- 2005 262 323    US-B1- 6 266 285**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

The disclosure herein generally relates to memory systems. In particular, this disclosure relates to systems and methods for facilitating in-DRAM cycle-based levelization.

In a modem memory system, the signal flight time on a command/address bus may be different from the signal flight time on a data bus due to different topologies of the command/address bus and the data bus. Such flight-time discrepancy can prevent the data bus from reaching 100% utilization in a multi-rank, multi-lane memory system.

US 2005/262323 A1 describes a memory system having multiple memory devices which reduces average access latency by enabling different latencies for different regions of physical memory, providing an address map conducive to placing frequently accessed memory addresses into the lowest latency regions of physical memory; and assigning the frequently accessed memory addresses to the lowest latency regions of physical memory.

US 6,266,285 B1 describes a method of operation of a memory device. The memory device includes a section of memory having a plurality of memory cells. The method of operation comprises receiving a request for a write operation and sampling a first portion of data after a delay time transpires in response to the request for a write operation. A method of controlling the memory device comprises issuing a request for a write operation to the memory device. The memory device samples data after a number of clock cycles of the external clock signal transpire in response to the request. The method of controlling also comprises issuing a first portion of data to the memory device after the number of clock cycles of the external clock signal transpire.

**BRIEF DESCRIPTION OF THE FIGURES**

FIG. 1 illustrates a dynamic random access memory (DRAM) system 100 with a fly-by command/address topology in accordance with an embodiment of the present invention.

FIG. 2 illustrates a DRAM system 200 with a fly-by command/address topology in accordance with an embodiment of the present invention.

FIG. 3 presents a set of exemplary native write-latency values for the DRAM devices in DRAM system 200 in accordance with an embodiment of the present invention.

FIG. 4 presents a write-operation timing diagram with in-controller write levelization for DRAM system 200 with the native write-latency values presented in FIG. 3, in accordance with an embodiment of the present invention.

FIG. 5 presents a set of write-operation timing diagrams with in-DRAM and in-controller write levelization for DRAM system 200 with the native write-latency values presented in FIG. 3, in accordance with an embodiment of the present invention.

FIG. 6 presents a set of write-operation timing diagrams with in-DRAM write levelization for DRAM system 200 with the native write-latency values presented in FIG. 3, in accordance with an embodiment of the present invention.

FIG. 7 presents a set of exemplary native read-latency values for the DRAM devices in DRAM system 200 in accordance with an embodiment of the present invention.

FIG. 8 presents a read-operation timing diagram with in-controller read levelization for DRAM system 200 with the native read-latency values presented in FIG. 7, in accordance with an embodiment of the present invention.

FIG. 9 presents a set of read-operation timing diagrams with in-DRAM and in-controller read levelization for DRAM system 200 with the native read-latency values presented in FIG. 7, in accordance with an embodiment of the present invention.

FIG. 10 presents a set of read-operation timing diagrams with in-DRAM read levelization for DRAM system 200 with the native read-latency values presented in FIG. 7, in accordance with an embodiment of the present invention.

FIG. 11A presents a block diagram of a DRAM module 1100 that facilitates both in-DRAM write and read levelization in accordance with an embodiment of the present invention.

FIG. 11B presents a block diagram of a levelization mechanism 1106 in accordance with an embodiment of the present invention.

FIG. 11C presents a block diagram of a memory controller 1140 in accordance with an embodiment of the present invention.

FIG. 12 presents a set of timing diagrams during an in-DRAM write-levelization configuration process in accordance with an embodiment of the present invention.

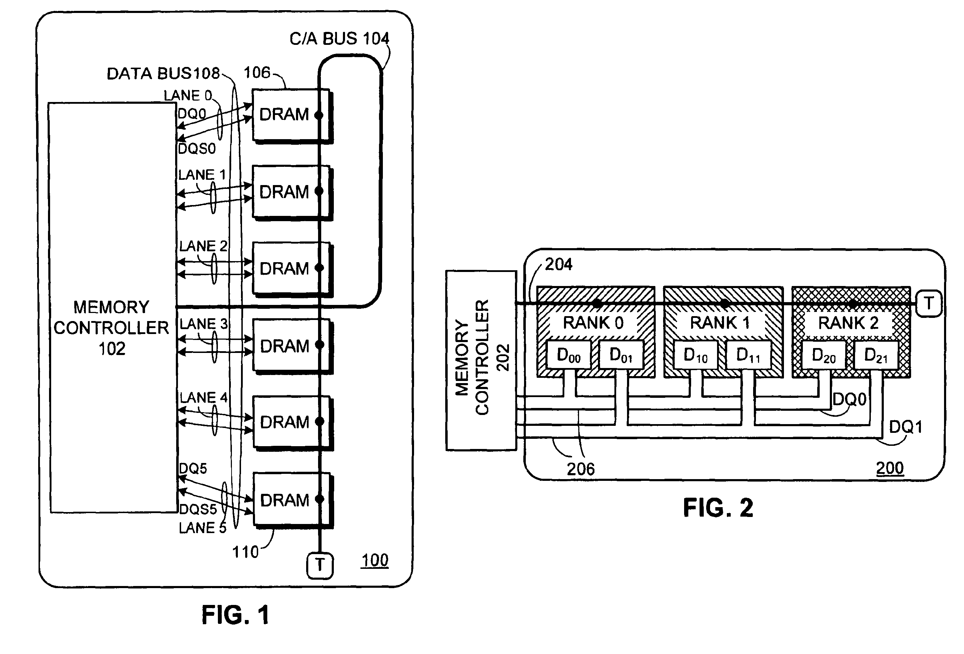

In the drawings, the same reference numbers identify identical or substantially similar elements or acts. The most significant digit or digits in a reference number refer to the figure number in which that element is first introduced. For example, element 100 is first introduced in and discussed in conjunction with FIG. 1.

## DETAILED DESCRIPTION

The following description is presented to enable any person skilled in the art to make and use the invention, and is provided in the context of a particular application and its requirements. Various modifications to the disclosed embodiments will be readily apparent to those skilled in the art.

## Overview

One embodiment of the present invention provides a memory system that facilitates in-DRAM cycle-based levelization for write and/or read operations in a multi-rank, multi-lane DRAM system. With in-DRAM cycle-based levelization, the system can individually program an additive write and/or read latency for a respective lane in a respective rank, thereby allowing the data bus to reach full utilization.

FIG. 1 illustrates a DRAM system 100 with a fly-by command/address topology in accordance with an embodiment of the present invention. System 100 includes a memory controller 102 and a plurality of memory devices (e.g., DRAM devices), including DRAM devices 106 and 110. The memory controller 102 is in communication with the DRAM devices via a command/address bus 104 and a data bus 108. In this disclosure, a memory device may contain one or more memory chips. A command/address bus may carry a clock signal, and can be referred to as a C/A bus, CMD/ADD bus, or RQ bus. A data bus, which carries data signals and/or data strobe signals, can be referred to as a DQ bus or DQ/DQS bus. Furthermore, a memory controller can be referred as a controller. The terminology "memory system," "DRAM system," or "system" can refer to one or more memory modules as well as a combination of a memory controller and one or more memory modules.

System 100 employs a fly-by topology for the command/address bus 104. With the fly-by topology, the command/address bus 104 passes by the DRAM devices in succession and may have one termination. This fly-by topology improves the signal quality at high data rates. The data bus 108, on the other hand, includes multiple lanes (e.g., LANE 0 to LANE 5). A lane can carry a group of signals with matched timings. A respective DRAM device couples to one or more lanes of the data bus. The total width of the data bus is $n{\times}k$ bits, wherein a lane is $k$-bit wide and the data bus includes $n$ lanes. For example, DRAM device 106 can exchange data with memory controller 102 through LANE 0, which includes a $k$-bit wide data bus DQ0 and a data strobe bus DQS0. Note that a data strobe bus can carry single-ended or differential data strobes. Another DRAM device 110 can exchange data with memory controller 102 through LANE 5, which includes a $k$-bit wide data bus DQ5 and a data strobe bus DQS5.

Due to the different topologies of the control/address bus and the data bus, the arrival time of a write command at a DRAM device can vary with respect to the arrival time of the data corresponding to the write command. When the difference between these two arrival times exceeds a clock cycle, the DRAM device can experience one or more clock cycles of native write latency. That is, the controller may need to alter the data transmission by one or more clock cycles compared to the write command. Similarly, the controller may experience a native read latency from a DRAM device. That is, the controller may need to wait for one or more clock cycles for the data to appear on the data bus after issuing a read command. The value of native write or read latency can grow larger in terms of the number of clock cycles when the clock speed increases.

Note that, in this disclosure, "write latency" refers to the timing difference between the *arrival* time of a write command at a DRAM device and the *arrival* time of the data burst at the DRAM device. "Native write latency," denoted as NWL, refers to the inherent timing difference between the arrival times of a write command and a data burst at a DRAM. Correspondingly, "additive write latency," denoted as AWL, refers to an additional, artificial write latency imposed to a DRAM device in addition to its native write latency. "Total write latency," denoted as TWL, refers to the total amount of timing difference between the arrival times of a write command and the data burst, and is the sum of the native write latency and additive write latency.

"Read latency," on the other hand, refers to the timing difference between the time when the controller places a read command on the command/address bus and when the controller receives the corresponding data burst. "Native read latency," denoted as NRL, refers to the inherent delay between the issuance of a read command by the controller and the time when the data burst is received by the controller. "Additive read latency," denoted as ARL, refers to an additional, artificial read latency imposed to a DRAM device in addition to its native read latency. "Total read latency," denoted as TRL, refers to the total amount of timing difference between the time when the controller issues a read command and the time when the controller receives the data burst, and is the sum of the native read latency and the additive read latency.

In a memory module, multiple memory devices can be arranged in a multi-rank configuration. A memory rank typically includes a set of memory devices, where a respective memory device couples to a respective lane of the data bus. All memory devices in a rank can be selected with a single chip-select signal. The distribution of native write or read latencies among different lanes in one rank can be different from that of another rank. This difference can prevent the controller from fully pipelining the data transfer and reaching 100% data-bus utilization. Embodiments of the present invention provide a mechanism that allows a DRAM device in a rank to adjust, or "levelize," its write/read latency. Such in-DRAM levelization can ensure that the write or read latency distribution in one rank is substantially similar to that of another rank, and hence allows up to 100% utilization of the data bus.

### In-DRAM Write Levelization

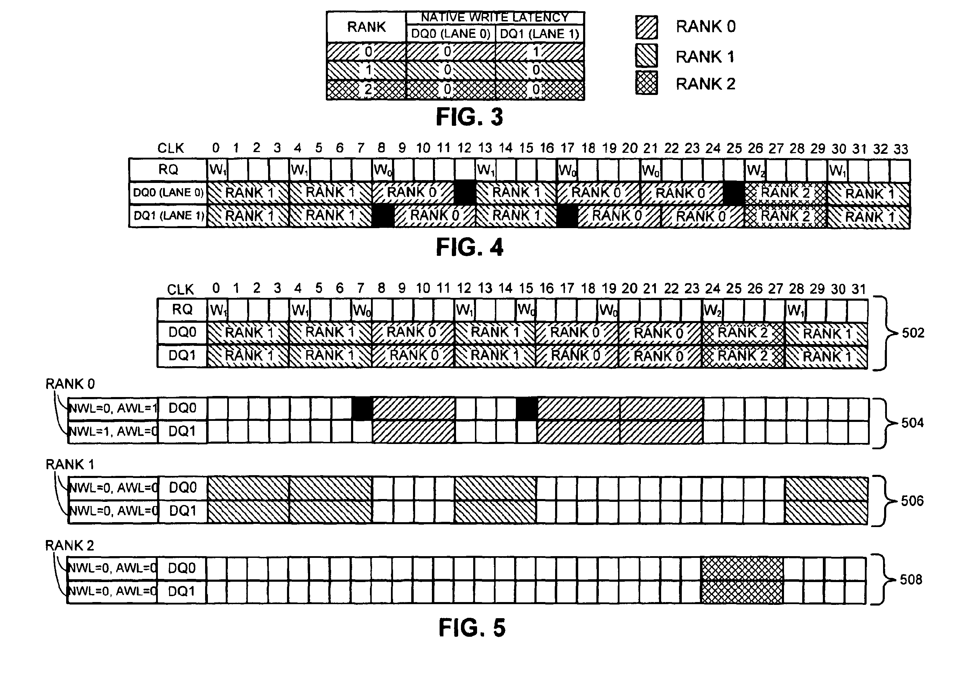

FIG. 2 illustrates a DRAM system 200 in which a number of memory devices are arranged in different ranks in accordance with an embodiment of the present invention. DRAM system 200 includes six DRAM devices, $D_{00}$, $D_{01}$, $D_{10}$, $D_{11}$, $D_{20}$, and $D_{21}$, which are arranged in three ranks with devices $D_{00}$ and $D_{01}$ in RANK 0, devices $D_{10}$ and $D_{11}$ in RANK 1, and devices $D_{20}$ and $D_{21}$ in RANK 2. RANK 0, RANK 1, and RANK 2 are respectively indicated by a different fill pattern. These patterns are also used in the timing diagrams in FIGs. 3-10. A controller 202 couples to the three-rank DRAM devices through a command/address bus 204 and a data bus 206.

Command/address bus 204 is routed to the ranks in a fly-by topology. Data bus 206 includes two lanes, DQ0 and DQ1. A respective lane couples to a corresponding DRAM device in a respective rank. For example, DRAM device $D_{00}$ in RANK 0 couples to lane DQ0, and DRAM device $D_{01}$ couples to lane DQ1. In this disclosure, a DRAM device is denoted as $D_{ij}$, wherein $i$ denotes the rank index and $j$ denotes the lane index. Although FIG. 2 shows three ranks of memory devices coupled to the memory controller via two lanes of data bus 206, there can be more or fewer ranks and more or fewer lanes in system 200.

FIG. 3 presents a set of exemplary native write-latency values for the DRAM devices in DRAM system 200 in accordance with an embodiment of the present invention. The native write-latency values for the DRAM devices in RANK 1 and RANK 2 are both zero clock cycle. However, in RANK 0, the DRAM device on LANE 0, $D_{00}$, has a native write latency of zero cycle; and the DRAM device on LANE 1, $D_{01}$, has a latency of one cycle. If the native latency is compensated for by the controller alone, this uneven native write-latency distribution can cause an overhead to the data-bus utilization, as illustrated in FIG. 4. Note that the terminology "write/read-latency distribution" refers to the distribution of write/read latency values associated with different lanes in a rank.

FIG. 4 presents a write-operation timing diagram with in-controller write levelization for DRAM system 200 with the native write-latency values presented in FIG. 3, in accordance with an embodiment of the present invention. On top of the diagram is a series of indexed clock cycles (CLK). The first row illustrates the write commands issued by controller 202 on command/address bus 204. A write command is denoted as $W_i$, wherein $i$ is the rank index.

The second and third rows illustrate the data bursts placed by controller 202 on LANE 0 and LANE 1 of data bus 206, respectively. Each data burst is assumed to occupy four clock cycles. Other data-burst lengths are possible. A black square indicates an empty clock cycle, or a "bubble," inserted on a lane to prevent the data bursts from overlapping each other when the DRAM devices in the two different lanes do not have the same native write latency.

For the first two $W_1$ commands, controller 202 places the corresponding data bursts on data bus 206 at the same time as the transmission of the $W_1$ commands, because both DRAM devices in RANK 1 have zero native write latency (see FIG. 3). For the third write operation $W_0$, controller 202 places the data burst on LANE 0 at clock cycle 8, and the data burst on LANE 1 at clock cycle 9. A bubble appears on LANE 1 during clock cycle 8, because the LANE 1 DRAM device in RANK 0 ($D_{01}$) has a native write latency of one clock cycle, whereas the LANE 0 DRAM device ($D_{00}$) has zero native write latency.

Controller 202 then inserts a bubble into LANE 0 in clock cycle 12 after the data burst to DRAM device $D_{00}$ to levelize the subsequent data bursts to RANK 1. Similarly, for the fifth and sixth write operations to RANK 0, controller 202 inserts a bubble on LANE 1 (clock cycle 17) and LANE 0 (clock cycle 25) respectively to keep the subsequent data bursts to RANK 2 levelized. Note that controller 202 does not need to insert bubbles between data bursts corresponding to two consecutive $W_0$ commands or a $W_2$ command and a $W_1$ command.

In a multi-rank, multi-lane memory system, if just in-controller levelization is used, bubbles appear when two consecutive write commands are directed to two ranks with different native write-latency distributions among different lanes. In the example in FIG. 4, bubbles appear whenever the write operation changes from RANK 0 to RANK 1 or RANK 2, or vice versa. These bubbles create overhead and prevent 100% data-bus utilization. This overhead increases with greater discrepancies among write-latency distributions as well as more frequent switching between ranks with different write-latency distributions.

Conventional technologies cannot overcome this overhead problem, because the data bus is a shared resource for all ranks, and the controller aligns data bursts for different ranks by pre-skewing the timing between write commands and data bursts. If the pre-skew for the previous write operation is different from the pre-skew for the current write operation, the controller may be required to stall before issuing the current write command. The reason for such stall, or insertion of bubbles, is that the pipelining or "tiling" on the data bus cannot interfere or cause overlapping between two consecutive write operations.

To overcome this inherent deficiency, embodiments of the present invention facilitate in-DRAM write levelization which allows a DRAM device to adjust its own write latency. With in-DRAM write levelization, a rank can have substantially similar write-latency distribution across the lanes, thereby allowing the data bus to achieve up to 100% utilization.

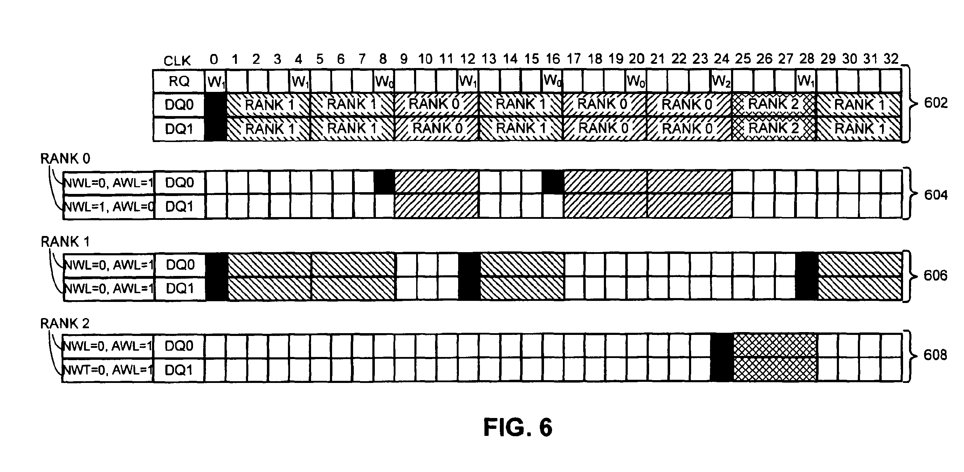

FIG. 5 presents a set of write-operation timing diagrams with in-DRAM and in-controller write levelization for DRAM memory system 200 with the native write-latency values presented in FIG. 3, in accordance with an embodiment of the present invention. Timing diagram 502 illustrates the write commands on command/address bus 204 as well as the data bursts on data bus 206. Timing diagrams 504, 506, and 508 illustrate the data bursts received by the DRAM devices in RANK 0, RANK 1, and RANK 2, respectively. Note that in the example in conjunction with FIGs. 5 and 6, the latency incurred to data bursts on the data bus is assumed to be negligible for illustration purposes. A data burst placed by controller 202 on data bus 206 is assumed to appear at a DRAM device in the same clock cycle.

In one embodiment, a DRAM device in a rank can impose an additive write latency to its native write latency. That is, a DRAM device can artificially extend the delay between the arrival of a write command and the actual writing of data present on the corresponding lane into the memory core. The additive write-latency value of a DRAM device associated with one lane can be different from that of another DRAM device associated with a different lane in the same rank. This way, DRAM system 200 can eliminate timing variation on the shared data bus, and controller 202 is not required to stall in order to prevent "tiling" overlaps. Hence, DRAM system 200 can achieve up to 100% utilization of the data bus during a series of write operations.

In the example in FIG. 5, the native write-latency distribution of RANK 0 is different from those of the other two ranks. A native write-latency distribution of a RANK $i$, denoted as $D\_NWL_i$, can be defined as follows:

$$D\_NWL_i = [NWL_{i,0}, \ldots, NWL_{i,j}, \ldots, NWL_{i,n}],$$

wherein $j$ denotes the lane index, $n$ denotes the total number of lanes, and $NWL_{ij}$ denotes the native write latency of a memory device which is associated with LANE $j$ and resides in RANK $i$. To levelize write latencies associated with different lanes in RANK 0, the DRAM device on LANE 0, RANK0 ($D_{00}$) is assigned an additive write latency (AWL) of one clock cycle, i.e., "AWL=1" as shown at the left end of timing diagram 504. Since the native write latency of DRAM device $D_{00}$ is zero, i.e., "NWL=0", the total write latency of DRAM device $D_{00}$ is one clock cycle. For DRAM device $D_{01}$, since its native write latency is already one clock cycle, its additive write latency is set to zero. Therefore, the total write latency of DRAM device $D_{11}$ is also one clock cycle. This way, the DRAM devices in RANK 0 are levelized on a per-device basis. As to RANK 1 and RANK 2, since all the DRAM devices therein have a native write latency of zero, the additive write latency for these devices is also set to zero.

Consequently, the distributions of total write latencies in different ranks can be substantially similar, which allows the data bursts to be fully pipelined on the data bus. A total write-latency distribution of a RANK $i$, denoted as $D\_TWL_i$, can be defined as follows:

$$D\_TWL_i = [TWL_{i,0}, \ldots, TWL_{i,j}, \ldots, TWL_{i,n}],$$

wherein $j$ denotes the lane index, $n$ denotes the total number of lanes, and $TWL_{i,j}$ denotes the total write latency of a memory device which is associated with LANE $j$ and resides in RANK $i$. Hence, $TWL_{i,j} = NWL_{i,j} + AWL_{i,j}$. When the distributions of total write latencies in different ranks are substantially similar, up to 100% data-bus utilization can be achieved.

Note that identical distributions of total write latencies in different ranks are not required to achieve 100% data-bus utilization. For example, the distributions of total write latencies in different ranks in the example shown in FIG. 5 are considered substantially similar if RANK 0 had a total write-latency distribution of [0, 1], RANK 1 had a total write-latency distribution of [1, 2], and RANK 2 had a total write-latency distribution of [2, 3] (note that these exemplary values are different from the values shown in FIG. 5). In this situation, controller 202 can still facilitate up to 100% data-bus utilization by properly pre-skewing write commands with respect to the corresponding data bursts for each rank. In other words, 100% data-bus utilization is attainable so long as the different ranks exhibit substantially the same distribution of *relative* total write latencies, while actual values of total write latency associated with a lane in different ranks can still be different. In one embodiment, a distribution of *relative* total write latencies of a RANK $i$, denoted as $D\_RTWL_i$, can be defined as follows:

$$D\_RTWL_i = [\varDelta TWL_{i,0}, \ldots, \varDelta TWL_{i,j}, \ldots, \varDelta TWL_{i,n}],$$

where $\Delta TWL_{i,j} = (TWL_{i,j} - TWL_{i,0})$. In this example, RANK $i'$ and RANK $i''$ would have substantially identical distributions of *relative* total write latencies when $D\_RTWL_{i'} = D\_RTWL_{i''}$.

As illustrated in FIG. 5, after levelization, the DRAM devices in RANK 0 both have one-cycle total write latency, whereas the DRAM devices in RANK 1 and RANK 2 all have zero total write latency. Full data-bus utilization is possible because controller 202 can pre-skew a write command in relation to the corresponding data bursts, so that the data bursts can fully occupy the data bus without bubbles.

In the example illustrated in FIG. 5, the third write operation, $W_0$, is directed to RANK 0. Since the total write latency of either DRAM device in RANK 0 is one clock cycle, the controller transmits $W_0$ in clock cycle 7 and places the corresponding data bursts in clock cycle 8. Due to the additive write latency, the actual writing of data burst on LANE 0 (DQ0) is artificially delayed by one cycle, which is indicated by the left-most bubble in timing diagram 504. Therefore, both data bursts for LANE 0 and LANE 1 are levelized.

A comparison of timing diagram 502 with the timing diagram in FIG. 4 indicates that, by using in-DRAM write levelization, the system can reduce the total time for eight write operations from 34 cycles to 32 cycles. The performance improvement increases with more switching among ranks and with greater native-latency differences. Note that the system achieves full data-bus utilization in this example by using both in-DRAM and in-controller levelization. The controller can properly pre-skew the write commands to achieve rank alignment. The in-DRAM levelization mechanism can then maintain lane alignment in a rank. In a further embodiment, the system can also use just in-DRAM levelization to achieve up to 100% data-bus utilization.

FIG. 6 presents a set of write-operation timing diagrams with in-DRAM write levelization for DRAM system 200 with the native write-latency values presented in FIG. 3, in accordance with an embodiment of the present invention. Timing diagram 602 illustrates the write commands on command/address bus 204 as well as the data bursts on data bus 206. Timing diagrams 604, 606, and 608 illustrate the data bursts received by the DRAM devices in RANK 0, RANK 1, and RANK 2, respectively.

In this embodiment, the additive write latency for each DRAM device is configured such that the distributions of total write latencies in different ranks are the same:

$$D\_TWL_{i'} = D\_TWL_{i''}; \ i' \neq i''.$$

That is, the DRAM devices coupled to the same lane in different ranks have the same total write latency. For example, in RANK 0, DRAM device $D_{00}$ has an additive write latency of one clock cycle, and DRAM device $D_{01}$ has zero additive write latency. Hence, the total write latency for either DRAM device $D_{00}$ or DRAM device $D_{01}$ is one clock cycle. As to RANK 1 and RANK 2, since all the DRAM devices have zero native write latency, the additive write latency for each one of them is set to one clock cycle. As a result, the total write latency for every DRAM device in all three ranks is uniformly one clock cycle. Note that, in general, it is not necessary for the total write latency for the DRAM devices in all the ranks to be matched. As explained in the description in conjunction with FIG. 5, 100% data bus utilization is attainable so far as the data latency relative to the command latency is matched on a per rank basis using in-DRAM levelization.

Complete in-DRAM write levelization frees the controller from the burden of aligning data bursts for different ranks and coordinating different timing between write commands and the corresponding data bursts. As shown in timing diagram 602, controller 202 issues write commands at constant time intervals (every four clock cycles). Each write command leads the corresponding data bursts by one clock cycle. Note that controller 202 is still responsible for determining the maximum total write latency of each rank to compute the proper lead time of a write command with respect to the corresponding data bursts, which in this example is one clock cycle. In one embodiment, the controller determines this lead time during an initialization process.

## In-DRAM Read Levelization

Similar to in-DRAM write levelization, in-DRAM read levelization can facilitate up to 100% data-bus utilization during a series of read operations. In a read operation, the controller issues a read command through the command/address bus. After receiving the read command, the DRAM devices in the corresponding rank process the read command, read the data from the memory cores, and place the data on respective lanes of the data bus. Subsequently, the controller receives the data from the data bus.

There is typically a delay, referred to as native read latency, between read-command issuance and data arrival at the controller. Due to the different topologies of the command/address bus and the data bus, the native read-latency values can differ among DRAM devices in a rank as well as among different ranks. The system may not be able to attain 100% data-bus utilization during read operations using just in-controller levelization.

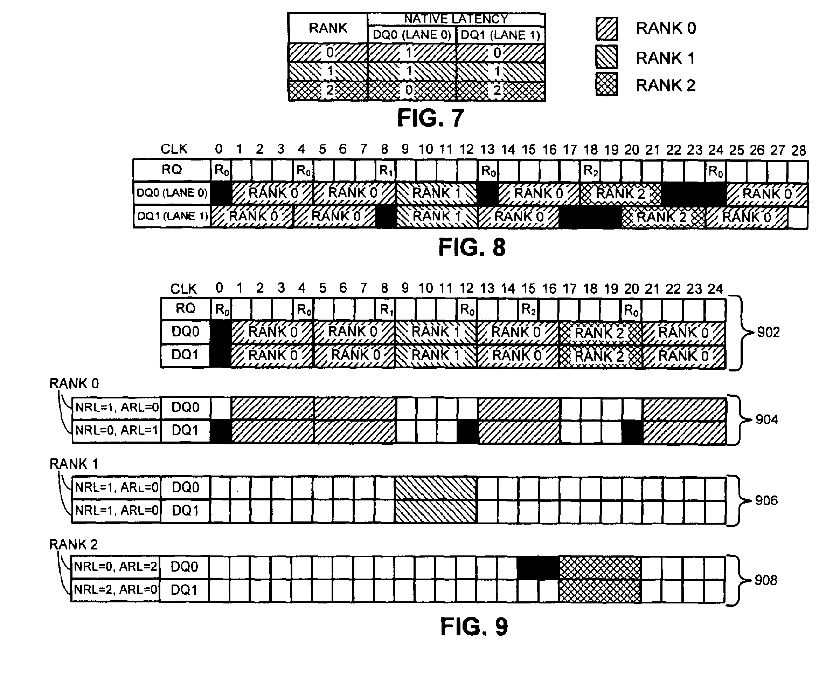

FIG. 7 presents a set of exemplary native read-latency values for the DRAM devices in DRAM system 200 in accordance with an embodiment of the present invention. The native read-latency values are: one clock cycle for DRAM device $D_{00}$ (RANK 0, LANE 0), zero for DRAM device $D_{01}$ (RANK 0, LANE 1), one clock cycle for both DRAM device $D_{10}$ (RANK 1, LANE 0) and DRAM device $D_{11}$ (RANK 1, LANE 1), zero for DRAM device $D_{20}$ (RANK 2, LANE 0), and two clock cycles for DRAM device $D_{21}$ (RANK 2, LANE 1). Note that the native read-latency distributions in these three ranks are all different, which can cause a significant overhead to the data-bus utilization, as illustrated in FIG. 8. A native read-latency distribution of a RANK $i$, denoted as $D\_NRL_i$, can be defined as follows:

$$D\_NRL_i = [NRL_{i.0}, \ldots, NRL_{i.j}, \ldots, NRL_{i.n}],$$

wherein $j$ denotes the lane index, $n$ denotes the total number of lanes, and $NRL_{i.j}$ denotes the native read latency of a memory device which is associated with LANE $j$ and resides in RANK $i$.

FIG. 8 presents a read-operation timing diagram with in-controller read levelization for DRAM system 200 with the native read-latency values presented in FIG. 7, in accordance with an embodiment of the present invention. The first row illustrates the read commands issued by controller 202 on command/address bus 204. A read command is denoted as $R_i$, wherein $i$ is the rank index. The second and third rows illustrate the data bursts placed by the DRAM devices on LANE 0 and LANE 1 of data bus 206, respectively. Each data burst is assumed to occupy four clock cycles. Other data-burst lengths are possible.

In response to the first two $R_0$ commands, DRAM device $D_{01}$ places the data bursts on LANE 1 at the same time as the arrival of the $R_0$ commands, because the native read latency of DRAM device $D_{01}$ is zero. The data bursts placed by DRAM device $D_{00}$ lag behind the $R_0$ commands by one clock cycle, since the native read latency of DRAM device $D_{00}$ is one clock cycle.

During the third read operation, controller 202 switches from RANK 0 to RANK 1 and issues an $R_1$ command. Controller 202 places $R_1$ in clock cycle 8 to ensure the data burst from DRAM device $D_{10}$ properly follows the data burst from DRAM device $D_{00}$. DRAM device $D_{11}$ places its data burst in clock cycle 9 because DRAM device $D_{11}$ has the same native read latency as DRAM device $D_{10}$. As a result, a bubble appears on LANE 1 in clock cycle 8. Similarly, a bubble appears on LANE 0 in clock cycle 13 when the controller issues the fourth read command $R_0$ which follows the $R_1$ command.

Note that three bubbles appear on LANE 1 during clock cycles 17-19 when the controller switches from read command $R_0$ to read command $R_2$. This large overhead is caused by the large difference between the native read-latency values of DRAM device $D_{01}$ and DRAM device $D_{21}$. Similarly, three bubbles appear on LANE 0 during clock cycles 22-24 when the controller switches from read command $R_2$ to read command $R_0$.

To overcome this inherent deficiency, embodiments of the present invention facilitate in-DRAM read levelization which allows a DRAM device to adjust its own read latency. With in-DRAM read levelization, a rank can have substantially similar read-latency distribution across the lanes, thereby allowing the data bus to achieve up to 100% utilization.

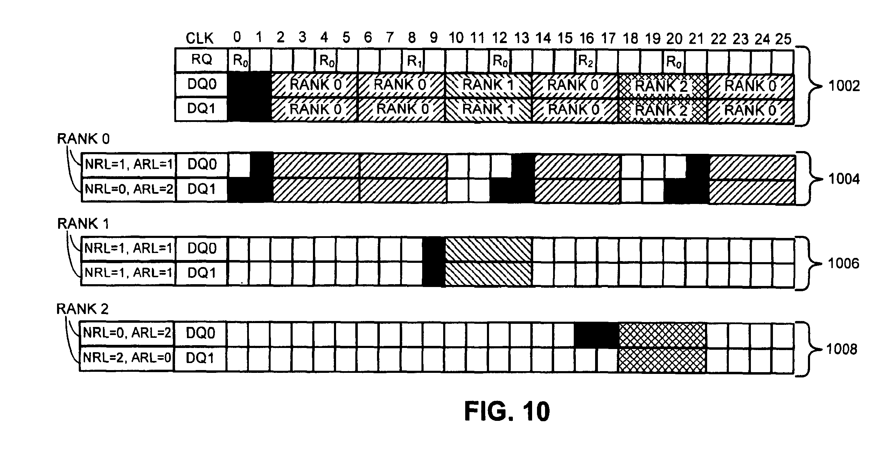

FIG. 9 presents a set of read-operation timing diagrams with in-DRAM and in-controller read levelization for DRAM system 200 with the native read-latency values presented in FIG. 7, in accordance with an embodiment of the present invention. Timing diagram 902 illustrates the read commands on command/address bus 204 as well as the data bursts on data bus 206. Timing diagrams 904, 906, and 908 illustrate the data bursts placed by the DRAM devices in RANK 0, RANK 1, and RANK 2, respectively. Note that in the examples in conjunction with FIGs. 9 and 10, the latency incurred to data bursts on data bus 206 is assumed to be negligible for illustration purposes. A data burst placed by a DRAM device on data bus 206 is assumed to appear at controller 202 in the same clock cycle.

In one embodiment, a DRAM device in a rank can impose an additive read latency to its native read latency. That is, a DRAM device can artificially extend the delay between the arrival of a read command and the time when the DRAM device places data on the data bus. In a rank, the additive read-latency value of a DRAM device associated with one lane can be different from that of another DRAM device associated with a different lane. This way, two memory devices, which are associated with the same lane but reside in two different ranks, can exhibit substantially similar total read latency, which is the sum of a device's native read latency and additive read latency. Hence, DRAM system 200 can achieve up to 100% utilization of the data bus during a series of read operations.

In the example in FIG. 9, the native read-latency distributions of the three ranks are different from one another. In one embodiment, to levelize the total read latencies associated with lanes in the three ranks, controller 202 assigns additive read-latency values to each DRAM device. Specifically, in RANK 0, DRAM device $D_{00}$ has a native read latency of one clock cycle, i.e., "NRL=1," and is assigned an additive read latency (ARL) of zero, i.e., "ARL=0." For DRAM device $D_{01}$, NRL=0 and Art=1. Hence, both DRAM devices in RANK 0 exhibit a total read latency of one clock cycle. Similarly, the DRAM devices in RANK 1 exhibit a total read latency of one clock cycle, and the DRAM devices in RANK 2 exhibit a total read latency of two clock cycles.

Consequently, the distributions of total read latencies in different ranks can be substantially similar, which allows the data bursts to be fully pipelined on the data bus. A total read-latency distribution of a RANK $i$, denoted as $D\_TRL_i$, can be defined as follows:

$$D\_TRL_i = [TRL_{i.0}, \ldots, TRL_{i,j}, \ldots, TRL_{i,n}],$$

wherein $j$ denotes the lane index, $n$ denotes the total number of lanes, and $TRL_{i.j}$ denotes the total read latency of a memory device which is associated with LANE $j$ and resides in RANK $i$. Hence, $TRL_{i.j} = NRL_{i.j} + ARL_{i.j}$. When the distributions of total read latencies in different ranks are substantially similar, up to 100% data-bus utilization can be achieved.

Note that identical distributions of total read latencies in different ranks are not required to achieve 100% data-bus utilization. For example, the distribution of total read latencies in different ranks in the example shown in FIG. 9 are considered substantially similar if RANK 0 had a total read-latency distribution of [2, 1], RANK 1 can had a total read-latency distribution of [3, 2], and RANK 2 had a total read-latency distribution of [1, 0] (note that these exemplary values are different from the values shown in FIG. 9). In this situation, controller 202 can still achieve up to 100% data-bus utilization by properly pre-skewing read commands with respect to the corresponding data bursts for each rank. In other words, 100% data-bus utilization is attainable so long as the different ranks exhibit substantially the same distribution of *relative* total read latencies, while the actual values of total read latency associated with a lane in different ranks can still be different. In one embodiment, a distribution of *relative* total read latencies of a RANK $i$, denoted as $D\_RTRL_i$, can be defined as follows:

$$D\_RTRL_i = [\Delta TRL_{i.0}, \ldots, \Delta TRL_{i,j}, \ldots, \Delta TRL_{i,n}],$$

where $\Delta TRL_{i.j} = (TRL_{i.j} - TRL_{i.0})$. In this example, RANK $i'$ and RANK $i''$ would have substantially identical distributions of *relative* total read latencies when $D\_RTRL_{i'} = D\_RTRL_{i''}$.

As illustrated in FIG. 9, after levelization, the DRAM devices in RANK 0 and RANK 1 all have one-cycle total read latency, whereas the DRAM devices in RANK 2 both have two-cycle total read latency. Full data-bus utilization is possible because controller 202 can pre-skew a read command in relation with the corresponding data bursts, so that the data bursts can fully occupy the data bus without bubbles.

In the example illustrated in FIG. 9, the fifth read operation, $R_2$, is directed to RANK 2. Since the total read latency of both DRAM devices in RANK 2 is two clock cycles, the controller pre-skews read operation $R_2$ by two clock cycles and transmits read operation $R_2$ in clock cycle 15. Due to the additive read latency, the actual time when the data burst appears on LANE 0 (DQ0) is artificially delayed by two cycles, which is indicated by the two-cycle bubble in timing diagram 908. Therefore, both data bursts for LANE 0 and LANE 1 from RANK 2 are levelized.

A comparison of timing diagram 902 with the timing diagram in FIG. 8 indicates that, by using in-DRAM read levelization, the system can reduce the total time for six read operations from 29 cycles to 25 cycles. In general, the performance improvement increases with more switching among ranks and with greater native-latency differences. The system achieves full data-bus utilization in this example by using both in-DRAM and in-controller read levelization. In a further embodiment, the system can also use just in-DRAM read levelization without in-controller levelization to achieve up to 100% data-bus utilization.

FIG. 10 presents a set of read-operation timing diagrams with in-DRAM read levelization for DRAM system 200 with the native read-latency values presented in FIG. 7, in accordance with an embodiment of the present invention. Timing diagram 1002 illustrates the read commands on command/address bus 204 as well as the data bursts placed by the DRAM devices on data bus 206. Timing diagrams 1004, 1006, and 1008 illustrate the data bursts transmitted by the DRAM devices in RANK 0, RANK 1, and RANK 2, respectively.

In this embodiment, the additive read latency for each DRAM device is configured such that the distributions of total read latencies in different ranks are the same:

$$D\_TRL_{i'} = D\_TRL_{i''}; \quad i' \neq i''.$$

That is, the DRAM devices coupled to the same lane in different ranks have the same total read latency. In this example, the largest native read latency, which is two clock cycles, occurs in DRAM device $D_{20}$. Therefore, all the DRAM devices are configured to have a total read latency of two cycles. In RANK 0, DRAM device $D_{00}$ has a native read latency of one clock cycle, and DRAM device $D_{01}$ has a native read latency of zero. Accordingly, DRAM device $D_{00}$ is assigned an additive read latency of one clock cycle, and DRAM device $D_{01}$ is assigned an additive read latency of two clock cycles. The total read latency for both DRAM device $D_{00}$ and DRAM device $D_{01}$ is two clock cycles. RANK I and RANK 2 are configured in a similar way such that each DRAM device exhibits two clock cycles of total read latency. As a result, the total read latency for every DRAM device in all three ranks is uniformly two clock cycles.

Complete in-DRAM read levelization frees the controller from the burden of aligning data bursts to different ranks and coordinating different timing between read commands and the corresponding data bursts. As shown in timing diagram 1002, the controller issues read commands at constant time intervals (every four clock cycles). Each read command leads the corresponding data bursts by two clock cycles. Note that the controller is still responsible for determining the maximum total read latency of a rank to compute the proper lead time of a read command with respect to the corresponding data bursts. In one embodiment, the controller determines this lead time during an initialization process.

**Implementation**

In one embodiment, to facilitate in-DRAM levelization, the controller and the DRAM system provide a levelization mechanism which configures the additive write/read latency for a DRAM device. Such a levelization mechanism can include one or more circuits. The controller first determines the native write/read latency of a DRAM device, and then determines and communicates the proper additive latency values for the DRAM device.

In conventional systems, the controller is typically required to detect the native write/read latency of each DRAM device to perform in-controller levelization properly. Hence, embodiments of the present invention can adopt a number of existing methods for detecting the native write/read latency of the DRAM devices. For example, during initialization, the controller can issue a read command to a DRAM device to read a pre-stored special data sequence. Based on the timing and value of the returned sequence, the controller can detect the DRAM device's native read latency.

After determining the native write/read latency values of the DRAM-devices, the controller then determines their proper additive write/read latency. In one embodiment, where both in-controller and in-DRAM levelization are used, the controller assigns the additive write/read latency values such that the *relative* write/read-latency distributions across the ranks are substantially similar. In a further embodiment, where just in-DRAM levelization is used, the controller assigns the additive write/read latency values such that the distributions of *total* write/read-latencies across the ranks are the same. That is, the actual values of total write/read latency associated with the same lane across different ranks are the same.

Existing DRAM devices typically include one or more registers, such as a mode register or an extended mode register, which provide a mechanism to configure additive write/read latency. However, in a conventional multi-rank, multi-lane configuration, the controller typically programs a DRAM device's additive write/read latency through the command/address bus using a device-select signal, which selects an entire rank at once. In other words, in conventional systems, all the DRAM devices in a rank have uniform additive write/read latency values.

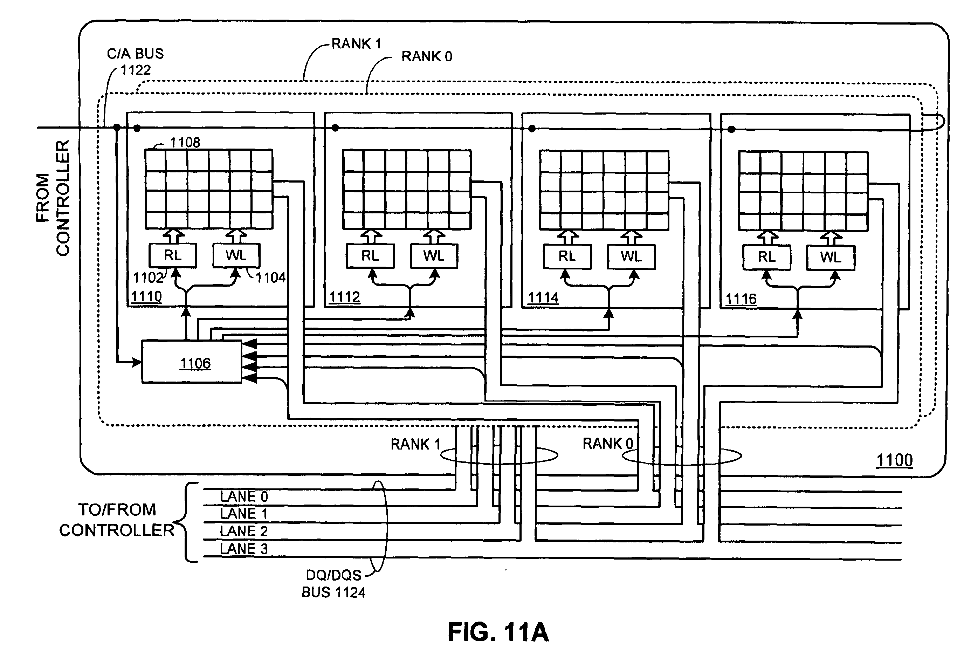

In one embodiment of the present invention, the controller configures the additive write/read latency for individual DRAM devices in a rank using both the command/address bus and the data bus. FIG. 11A presents a block diagram of a DRAM module 1100 that facilitates in-DRAM write and read levelization in accordance with an embodiment of the present invention. DRAM module 1100 is in communication with a memory controller through a data bus 1124 which includes four lanes and a command/address bus 1122. DRAM module 1100 includes two memory ranks, RANK 0 and RANK 1. RANK 0 includes four DRAM devices, 1110, 1112, 1114, and 1116. A respective DRAM device includes at least one memory core, a read-latency register (RL) and a write-latency register (WL). For instance, DRAM device 1110 includes a memory core 1108, a read-latency register 1102, and a write-latency register 1104. Furthermore, a respective memory rank also includes a levelization mechanism which can include one or more circuits. For instance, RANK 0 includes levelization mechanism 1106 which can individually configure the additive write/read latency of the DRAM devices.

In this example, command/address bus 1122 is routed from the controller to RANK 0 and RANK 1 in a fly-by topology. In a rank, a respective DRAM device couples to a respective lane of data bus 1124. For example, DRAM devices 1110, 1112, 1114, and 1116 in RANK 0 are coupled to LANE 0, LANE 1, LANE 2, and LANE 3 respectively. During the initial configuration process, the controller issues an additive-latency configuration command directed to a given rank over the command/address bus 1122, and places the additive write/read latency value for each DRAM device on the corresponding lane. Levelization mechanism 1106 then reads the values from the lanes and configures the additive write/read latency for each DRAM device accordingly.

For example, the controller can send a configuration command to RANK 0 during initialization. The controller further places the additive write/read latency values for DRAM devices 1110, 1112, 1114, and 1116 on LANE 0, LANE 1, LANE 2, and LANE 3, respectively. Note that the controller may insert a delay between issuing the configuration command and placing the additive-latency values on the data bus to accommodate the native write latency of the DRAM devices.

Levelization mechanism 1106 in RANK 0 subsequently receives the configuration command. In response, levelization mechanism 1106 reads the value from the four lanes and obtains the additive write/read latency values for the DRAM devices. For example, levelization mechanism 1106 reads the value from LANE 0, and produces an additive write or read latency value for DRAM device 1110. In some embodiments, where a DRAM device's additive write latency can be derived from its additive read latency or vice versa, one configuration operation can be used to configure both additive write and read latency. In some embodiments, where the additive write latency and the additive read latency in a DRAM device are independent from each other, the controller can issue two configuration commands, one for write and one for read, to configure the DRAM devices.

After decoding the value obtained from LANE 0, levelization mechanism 1106 then sends the additive write or read latency value to write-latency register 1104 or read-latency register 1102 in DRAM device 1110, together with the corresponding control signals. In response, DRAM device 1110 configures the additive write or read latency for memory core 1108 based on the values stored in write-latency register 1104 or read-latency register 1102. In some embodiments, the additive write/read latency values can be stored in a general or multi-purpose register. In that case, separate write-latency and read-latency registers can be optional.

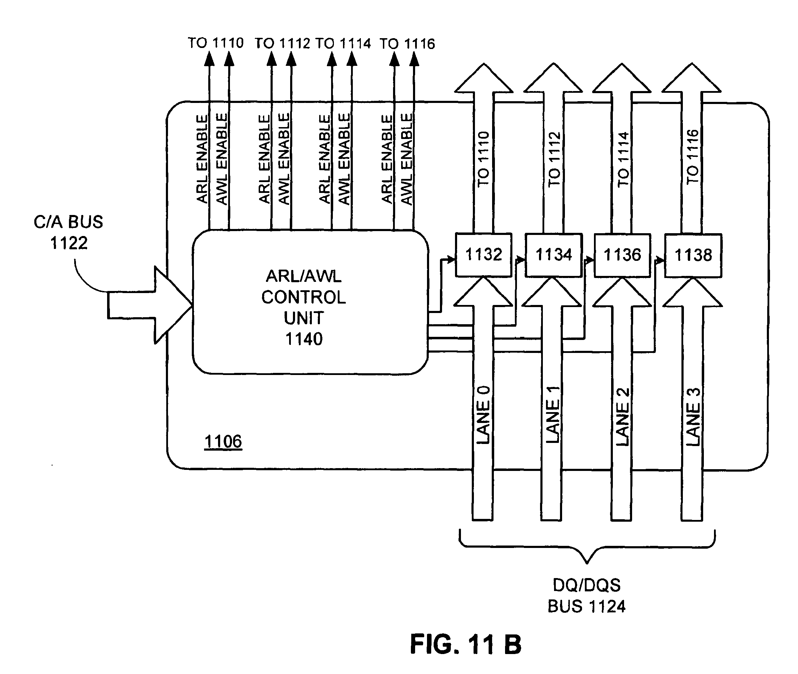

FIG. 11 B presents a block diagram of levelization mechanism 1106 in accordance with an embodiment of the present invention. Levelization mechanism 1106 includes an AWL/ARL control unit 1140 and four AWL/ARL value decoders 1132, 1134, 1136, and 1138.

AWL/ARL control unit 1140 couples to command/address bus 1122 and produces AWL/ARL enable signals for DRAM devices 1110, 1112, 1114, and 1116. AWL/ARL control unit 1140 also couples to the four AWL/ARL value decoders 1132, 1134, 1136, and 1138. AWL/ARL value decoders 1132, 1134, 1136, and 1138 couple to the four lanes of data bus 1124, respectively, and produces the corresponding AWL and/or ARL values for DRAM devices 1110, 1112, 1114, and 1116, respectively.

During the configuration process, the memory controller issues an AWL/ARL configuration command on the command/address bus and places the corresponding AWL/ARL values on the four lanes of data bus 1124. After receiving the AWL/ARL configuration command over command/address bus 1122, AWL/ARL control unit 1140 generates activation signals for AWL/ARL value decoders 1132, 1134, 1136, and 1138, which in turn decodes the AWL/ARL values received from the four lanes of data bus 1124, and places these values on respective channels to the write-latency or read-latency registers of DRAM devices 1110, 1112, 1114, and 1116. In addition, AWL/ARL control unit 1140 generates AWL/ARL enable signals to active the write-latency or read-latency registers of DRAM devices 1110, 1112, 1114, and 1116.

In some embodiments, a DRAM device is provided with a separate levelization mechanism, which can reside outside or inside the DRAM device. Such a device-specific levelization mechanism can be activated when a configuration command is received over the command/address bus. After activation, the levelization mechanism reads the data from the lane coupled to the DRAM device, obtains the additive write/read latency value, and configures the memory core accordingly.

In further embodiments, the controller can use a separate communication channel, such as a dedicated signal path, either alone or in combination with the command/address bus and/or data bus, to communicate the additive write/ read latency values to a DRAM device.

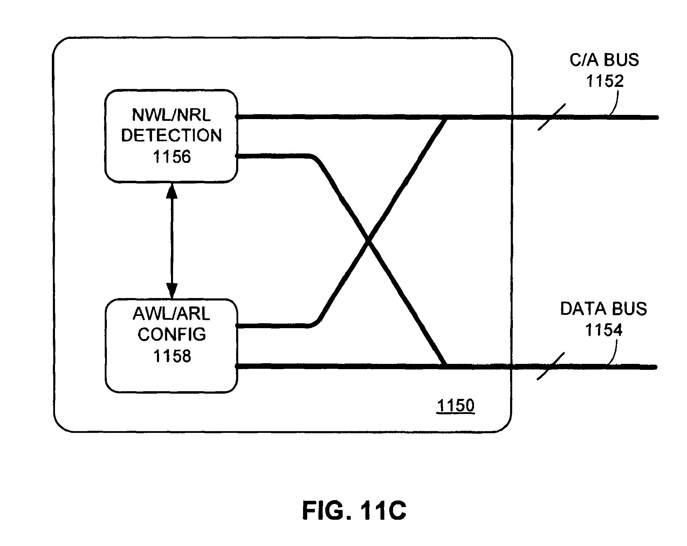

FIG. 11 C presents a block diagram of a memory controller 1150 in accordance with an embodiment of the present invention. Memory controller 1150 includes a native write-latency/read-latency detection mechanism 1156 and an additive write-latency/read-latency configuration mechanism 1158. Memory controller 1150 is coupled to a command/ address bus 1152 and a data bus 1154.

During an initial configuration process, NWL/NRL detection mechanism 1156 first detects the NWL and/or NRL of the DRAM devices in a memory rank. NWL/NRL detection mechanism 1156 then communicates the detected NWL/NRL values to AWL/ARL configuration mechanism 1158. AWL/ARL configuration mechanism 1148 subsequently computes the proper AWL/ARL values for the respective DRAM devices to achieve in-DRAM levelization, and communicates these values to the DRAM devices by placing the AWL/ARL values on different lanes of data bus 1154 coupled to the respective DRAM devices and by issuing an AWL/ARL configuration command to activate the AWL/ARL configuration process on the memory rank.

In one embodiment, to detect the native read latency of DRAM devices in a rank, NWL/NRL detection 1156 issues a read command to that rank. In response, DRAM devices in that rank places a special data sequence onto the lanes of the data bus. After receiving these special data sequences, NWL/NRL detection mechanism 1156 computes the native latency for a respective DRAM device based on the values of data sequence received on a respective lane corresponding to that DRAM device.

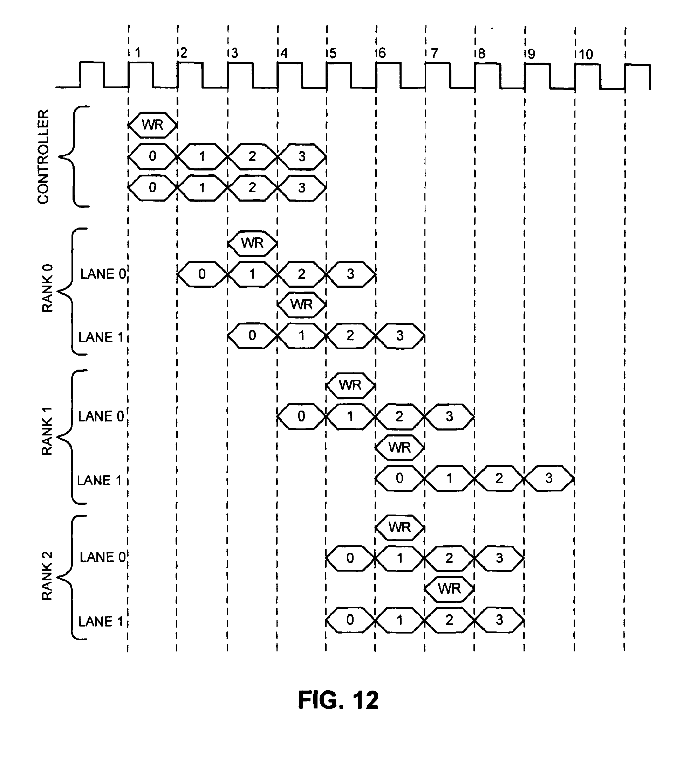

In one embodiment, a DRAM device can determine its own native write latency. FIG. 12 presents a set of timing diagrams during an in-DRAM write-levelization configuration process in accordance with an embodiment of the present invention. During initialization, assuming that the minimum native write latency among all the memory devices is 0, the controller sends a write command on the command/address bus and simultaneously a data burst of value 0, 1, 2, 3 in both lanes of the data bus, wherein each value occupies one clock cycle. When the write command arrives at a DRAM device, the DRAM device samples the data bus normally, and, depending on its native write latency, receives one of the values in the data burst. The DRAM device then takes the first received data word as the value of its native write latency in terms of clock cycles. In one embodiment, ARL/WRL value decoders 1132, 1134, 1136, and 1138 can be configured to operate in conjunction with ARL/AWL control unit 1140 as a native write-latency detection mechanism.

The components of the in-DRAM cycle-based levelization mechanism described above can include any collection of computing components and devices operating together. The components of the in-DRAM cycle-based levelization mechanism can also be components or subsystems in a larger computer system or network. Components of an in-DRAM cycle-based levelization mechanism can also be coupled among any number of components (not shown), for example, buses, controllers, memory devices, and data input/output (I/O) devices, in any number of combinations. Many of these system components may be situated on a common printed circuit board (for example, a graphics card or game console device), or may be integrated in a system that includes several printed circuit boards that are coupled together in a system, for example, using connector and socket interfaces such as those employed by personal computer motherboards and dual inline memory modules ("DIMM"). In other examples, complete systems may be integrated in a single package housing using a system in package ("SIP") type of approach. Integrated circuit devices may be stacked on top of one another and utilize wire bond connections to effectuate communication between devices or may be integrated on a single planar substrate in the package housing.

Further, functions of the in-DRAM cycle-based levelization mechanism can be distributed among any number/combination of other processor-based components. The in-DRAM cycle-based levelization mechanisms described above include, for example, various DRAM systems. As examples, the DRAM memory systems can include double data rate ("DDR") systems like DDR SDRAM as well as DDR2 SDRAM, DDR3 SDRAM, and other DDR SDRAM variants, such as Graphics DDR ("GDDR") and further generations of these memory technologies, including GDDR2 and GDDR3, but are not limited to these memory systems.

Aspects of the in-DRAM cycle-based levelization mechanisms described herein may be implemented as functionality programmed into any of a variety of circuitry, including programmable logic devices (PLDs), such as field programmable gate arrays (FPGAs), programmable array logic (PAL) devices, electrically programmable logic and memory devices, and standard cell-based devices, as well as application specific integrated circuits (ASICs). Some other possibilities for implementing aspects of the in-DRAM cycle-based levelization mechanisms include: microcontrollers with memory (such as electronically erasable programmable read only memory (EEPROM), embedded microprocessors, firmware, software, etc.). Furthermore, aspects of the in-DRAM cycle-based levelization mechanisms may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

One embodiment provides a system, which comprises a plurality of memory devices arranged in a plurality of memory ranks, wherein memory devices in each rank are coupled to different lanes of a data bus. Moreover, at least one levelization mechanism that couples to at least one of the plurality of memory devices in a first rank and individually controls at least one of an additive write latency and an additive read latency for each one of at least some of the plurality of memory devices, to ensure that a distribution of relative total write or read latencies associated with the memory devices in the first rank is substantially similar to that in a second rank.

In one embodiment, the memory devices in at least two ranks exhibit different distributions of native write or read latencies.

In one embodiment, the levelization mechanism controls at least one of the additive write latency and additive read latency for the memory device to ensure that the memory device exhibits a substantially similar total write latency, total read latency, or both, as a corresponding memory device coupled to the same lane in the second rank.

In one embodiment, each memory rank couples to a command/address bus.

In one embodiment, the levelization mechanism receives from the command/address bus a command for configuring at least one of the additive write latency and additive read latency for the memory device. Additionally, the levelization mechanism receives from the data bus information indicative of at least one of the additive write latency and additive read latency for the memory device.

In one embodiment, at least one register in the memory device stores the information received from the data bus.

In one embodiment, the system includes two or more ranks of memory devices, wherein a first rank comprises two or more lanes of a data bus, wherein a first lane in the first rank is associated with a first additive write or read latency; and wherein a second lane in the first rank is associated with a second additive write or read latency that is different from the first additive write or read latency.

In one embodiment, the lanes in the first rank are couple to at least one memory device.

One embodiment provides a dynamic random-access memory (DRAM) module, comprising: a plurality of DRAM devices in a multi-rank, multi-lane arrangement; and a levelization mechanism to individually control at least one of an additive write latency and an additive read latency of a DRAM device in a rank.

In one embodiment, the levelization mechanism ensures at least one of a distribution of relative total write latencies and a distribution of relative total read latencies among the DRAM devices coupled to different lanes in the rank is substantially similar to that in another rank.

In one embodiment, the levelization mechanism ensures that at least one of the total write latency and the total read latency of each DRAM device in the rank is substantially similar to that of a corresponding DRAM device coupled to the same lane in another rank.

In one embodiment, the levelization mechanism receives from a memory controller a configuration command through a command/address bus. In response to the configuration command, the system receives a value indicative of at least one of the additive write latency and additive read latency of the DRAM device through a lane coupled to the DRAM device and configures at least one of the additive write latency and additive read latency of the DRAM device based on the received value.

One embodiment provides a system, comprising: a memory core; a register coupled to the memory core; a levelization mechanism, comprising an additive write-latency or additive read-latency value decoder that couples to a data bus, and an additive write-latency or additive read-latency control unit that couples to a command/address bus. In this embodiment, the levelization mechanism couples to the register, the data bus, and the command/address bus.

In one embodiment, the levelization mechanism receives from the command/address bus a configuration command issued by a memory controller; and receives from the data bus information indicative of at least one of an additive write latency and an additive read latency for the memory device.

In one embodiment, the levelization mechanism communicates at least one of a value of the additive write latency and a value of the additive read latency to the register based on the information received from the data bus, and sets at least one of the additive write latency and additive read latency for the memory device based on the value stored in the register.

One embodiment provides a memory controller, comprising: a read-latency detection mechanism to determine a native read latency of a memory device configured in a multi-rank, multi-lane arrangement; and an additive read-latency configuration mechanism to communicate to the memory device information indicative of an additive read latency for the memory device.

In one embodiment, while communicating the information to the memory device, the additive read-latency configuration mechanism communicates such information in a lane on a data bus coupled to the memory device and issues a command on a command/address bus.

In one embodiment, while determining the native read latency of the memory device, the read-latency detection mechanism: issues a read command to the memory device; receives data from the memory device in response to the read command; and computes a latency between issuing the read command and receiving the data.

One embodiment provides a memory controller, comprising: an additive write-latency configuration mechanism to communicate to a memory device information indicative of an additive write latency for the memory device in a multi-rank, multi-lane arrangement, wherein the additive write latency for the memory device is different from an additive write latency for another memory device in a same rank.

In one embodiment, while communicating the information to the memory device, the additive write-latency configuration mechanism concurrently sends a write command and one or more data bursts to the memory device, thereby allowing the memory device to measure its native write latency based on a value of the data burst received in response to the write command.

One embodiment provides a method which operates by: receiving from a memory controller information indicative of at least one of an additive write latency and an additive read latency for a memory device in a multi-rank, multi-lane arrangement; and individually levelizing total write latency and/or total read latency for memory devices coupled to different lanes in a rank.

In one embodiment, individually levelizing the total write latency and/or total read latency for the memory devices comprises: configuring an additive write latency and/or additive read latency for the memory device based on the received information.

In one embodiment, receiving the information from the memory controller comprises: receiving a command from a command/address bus; and receiving a value of the additive write latency and/or a value of the additive read latency, or both, for the memory device from a lane of a data bus to which the memory device couples.

One embodiment provides a method which operated by: determining at least one of a native write latency and a native read latency of a memory device configured in a multi-rank, multi-lane arrangement; determining at least one of an additive write latency and an additive read latency for the memory device, wherein the additive write latency and/or additive read latency are different from those of another memory device coupled to a different lane in a same rank; and communicating to the memory device information indicative of the additive write latency and/or the additive read latency.

In one embodiment, the additive write latency causes a distribution of relative total write latencies associated with the memory devices in one rank to be substantially similar to that in another rank.

In one embodiment, the additive read latency causes a distribution of relative total read latencies associated with the memory devices in one rank to be substantially similar to that in another rank.

In one embodiment, communicating the information to the memory device comprises: communicating a configuration command to the memory device over a command/address bus; and communicating a value of the additive write latency and/or a value of the additive read latency to the memory device in a lane to which the memory device couples.

One embodiment provides a machine-readable media including information that represents an apparatus, the represented apparatus comprising: a levelization mechanism to receive information indicative of at least one of an additive write latency and an additive read latency for a memory device in a multi-rank, multi-lane arrangement, wherein the additive write latency and/or additive read latency are different from those of another memory device in the same rank.

In one embodiment, the levelization mechanism receives a levelization command over a command/address bus and receives a value for the additive write latency and/or additive read latency over a data bus.

The foregoing descriptions of embodiments have been presented only for purposes of illustration and description. They are not intended to be exhaustive or to limit the present embodiments to the forms disclosed. Accordingly, many modifications and variations will be apparent to practitioners skilled in the art. Additionally, the above disclosure is not intended to limit the present invention. The scope of the present invention is defined by the appended claims.

## Claims

1. An apparatus (200) comprising:

   a command bus (104, 204);
   a data bus (108, 206) having at least a first lane and a second lane; and
   first and second memory devices (106, 110) coupled In common to the command bus (104, 204) to receive a memory write command, and coupled to respective first and second lanes of the data bus (108, 206) to receive, in parallel, respective first and second portions of a write data value associated with the memory write command, wherein the first memory device (106) is configurable, independently of the second memory device (110), to adjust a first timing offset between arrival of the memory write command and a time at which the first lane of the data bus (108, 206) is sampled to receive the first portion of the write data.

2. The apparatus (200) of claim 1 wherein a first time interval between arrival of the memory write command and arrival of the first portion of the write data at the first memory device (106) is potentially different from a second time interval between arrival of the memory write command and arrival of the second portion of the write data at the second memory device (110), and
   wherein the independent configurability of the first memory device (106) with respect to the first timing offset enables compensation for the potential difference between the first and second time intervals.

3. The apparatus (200) of claim 1 wherein the second memory device (110) is configurable, independently, of the first memory device (106), to adjust a second timing offset between arrival of the memory write command and a time at which the second lane of the data bus is sampled to receive the second portion of the write data.

4. The apparatus (200) of claim 3 wherein the first and second memory devices (106, 110) are independently configurable in response to a configuration command transmitted on the command bus (104, 204) and respective first and second latency values transmitted on the first and second lanes of the data bus (108,206),
   wherein the first memory device (106) comprises circuitry to adjust the first timing offset according to the first latency value and the second memory device (110) comprises circuitry to adjust the second timing offset according to the second latency value.

5. The apparatus (200) of claim 4 wherein the first latency value indicates a first number of clock cycles of delay to be added to the first time interval, and wherein the second latency value indicates a second number of clock cycles of delay to be added to the second time interval.

6. The apparatus (200) of claim 5 wherein the first number of clock cycles may include a fraction of a clock cycle.

7. The apparatus (200) of claim 6 wherein at least one of the first and second latency values may be zero.

8. The apparatus (200) of claim 4 wherein the circuitry to adjust the first timing offset according to the first latency value comprises a first register to store the first latency value, and wherein the circuitry to adjust the second timing offset according to the second latency value comprises a second register to store the second latency value.

9. The apparatus (200) of claim 8 wherein freedom to store a first latency value that is different from the second latency value establishes the configurability of the first memory device (106) that is independent of the second memory device (110).

10. The apparatus (200) of claim 1 further comprising a printed circuit board having the command bus (104, 204), data bus (108, 206) and first and second memory devices (106, 110) disposed thereon,
the printed circuit board having a socket connector to enable the apparatus to be removably inserted into a connector socket.

11. The apparatus (200) of claim 1 wherein the first and second memory devices (106, 110) comprise circuitry to output, in response to a memory read command transmitted on the command bus (104, 204), respective first and second portions of a read data value on the first and second lanes of the data bus (108. 206), and
wherein the first memory device (106) is configurable, independently of the second memory device (110), to adjust a second timing offset between arrival of the memory read command and a time at which the first portion of the read data value is output onto the first lane of the data bus (108, 206).

12. The apparatus (200) of claim 11 wherein the second memory device (110) is configurable, independently of the first memory device (106), to adjust a third timing offset between arrival of the memory read command and a time at which the second portion of the read data value is output onto the second lane of the data bus (108, 206).

13. The apparatus (200) of claim 12 wherein the first and second memory devices (106, 110) are independently configurable in response to a configuration command transmitted on the command bus (104, 204) and respective first and second latency values transmitted on the first and second lanes of the data bus (108,206),
wherein the first memory device (106) comprises circuitry to adjust the second timing offset according to the first latency value and the second memory device (110) comprises circuitry to adjust the third timing offset according to the second latency value.

14. The apparatus (200) of claim 13 wherein the circuitry to adjust the second timing offset according to the first latency value further comprises circuitry to adjust the first timing offset according to the first latency value,
the circuitry to adjust the first and second timing offsets including a register to store the first latency value.

15. The apparatus (200) of claim 13 wherein the circuitry to adjust the second timing offset includes a register to store the first latency value, and
wherein the first memory device (106) further comprises a register to store a third latency value received via the first lane of the data bus (108, 206) and circuitry to adjust the first timing offset according to the third latency value.

16. The apparatus (200) of claim 1 further comprising third and fourth memory devices coupled in common to the command bus (104, 204) to receive the memory write command, and coupled to the first and second lanes of the data bus (108, 206), respectively, to receive, in parallel, the respective first and second portions of the write data value, wherein the first memory device (106) is configurable, independently of the third and fourth memory devices, to adjust the first timing offset, and
wherein each of the second, third and fourth memory devices is likewise independently configurable to adjust a respective timing offset between arrival of the memory write command and a time at which the data bus (108, 206) is sampled.

17. The apparatus (200) of claim 16 wherein the first and second memory devices (106, 110) constitute at least a portion of a first rank of memory devices, and wherein the third and fourth memory devices constitute at least a portion of a second rank of memory devices.

18. The apparatus (200) of claim 16 wherein a first chip-select line is coupled in common to the first and second memory devices (106, 110) and a second chip-select line is coupled in common to the third and fourth memory devices.

19. A method of operation within a memory module having a plurality of memory devices (106, 110) coupled to receive commands via a common command bus (104, 204) and coupled to receive data in parallel via different lanes of a data bus (108, 206), the method comprising:

programming different time delay values within the memory devices (106, 110) to reduce differences between command-to-data timing offsets exhibited by the memory devices (106, 110) due, at least in part, to physical positions of the memory devices (106, 110) with respect to the common command bus (104, 204);

receiving a first memory write command within each of the memory devices (106, 110); and

delaying, within each of the memory devices (106, 110), for at least the programmed time delay value following receipt of the first memory write command before sampling corresponding write data via the respective lane of the data bus (108, 206).

20. The method of claim 19 further comprising:

receiving a first memory read command within each of the memory devices (106. 110); and

after receiving the first memory read command, delaying, within each of the memory devices (106, 110), for a time interval that includes the programmed time delay value before outputting read data that corresponds to the first memory read command.

21. The method of claim 19 wherein programming different time delay values comprises programming a first set of time delay values within the memory devices (106, 110) and

wherein delaying for at least the programmed time delay value comprises, for each of the memory devices (106, 110), delaying for a respective time delay value of the first set of time delay values.

22. The method of claim 21 wherein programming different time delay values comprises programming a second set of time delay values within the memory devices (106,110), the method further comprising:

receiving a first memory read command within each of the memory devices (106, 110); and

after receiving the first memory read command, delaying, within each of the memory devices (106, 110), for a time interval that includes a respective time delay value of the second set of time delay values before outputting read data that corresponds to the first memory read command.

**Patentansprüche**

1. Vorrichtung (200) umfassend:

einen Befehls-Bus (104,204);

einen Datenbus (108,206), welcher zu mindestens eine erste und eine zweite Leitung aufweist; und

eine erste und eine zweite Speichervorrichtung (106,110), welche gemeinsam mit dem Befehlsbus (104, 204) gekoppelt sind, um einen Speicher-Schreibbefehl zu empfangen, und welche jeweils an die erste oder zweite Leitung des Datenbusses (108,206) gekoppelt sind, um parallel jeweilige eine erste und eine zweite Menge von Schreibdatenwerten zu empfangen, weiche mit dem Speicher-Schreibbefehl assoziiert sind,

wobei die erste Speichervorrichtung (106) unabhängig von der zweiten Speichervorrichtung (110) dafür konfigurierbar ist, einen ersten Timing-Offset zwischen der Ankunftszeit des Speicher-Schreibbefehls und der Zeit anzupassen, zu der die erste Leitung des Datenbusses (108, 206) zum Empfangen der ersten Menge von Schreibdaten abgetastet wird.

2. Vorrichtung (200) nach Anspruch 1, wobei das erste Zeitintervall zwischen der Ankunft des Speicher-Schreibbefehls und der Ankunft der ersten Menge von Schreibdaten in der ersten Speichervorrichtung (106) potentiell verschieden ist von einem zweiten Zeitintervall zwischen der Ankunft des Speicher-Schreibbefehls und der Ankunft der zweiten Menge von Schreibdaten in der zweiten Speichervorrichtung (110), und

wobei die unabhängige Konfigurierbarkeit der ersten Speichervorrichtung (106) bezüglich des ersten Timing-Offsets eine Kompensation der potentiellen Differenz zwischen dem ersten und dem zweiten Zeitintervall erlaubt.

3. Vorrichtung (200) nach Anspruch 1, wobei die zweite Speichervorrichtung unabhängig von der ersten Speichervorrichtung (106) konfigurierbar ist, einen zweiten Timing-Offset zwischen der Ankunftszeit des Speicher-Schreibbefehls und der Zeit anzupassen, zu der die zweite Leitung des Datenbuses (108,206) zum Empfangen der zweiten Menge von Schreibdaten abgetastet wird

4. Vorrichtung (200) nach Anspruch 3, wobei die erste und zweite Speichervorrichtung (106,110) in Reaktion auf einen Konfigurationsbefehl, welcher über den Befehlsbus (104,204) übertragen wird, und auf jeweils einen ersten und

EP 2 158 544 B1

zweiten Latenzzeitwert unabhängig konfigurierbar sind, welcher über die erste beziehungsweise zweite Leitung des Datenbusses (108, 206) übertragen wird.
wobei die erste Speichervorrichtung (106) Schaltkreise zum Anpassen des ersten Timing-Offsets gemäß dem ersten Latenzzeüwert umfasst, und die zweite Speichervorrichtung (110) Schaltkreise zum Anpassen des zweiten Timing-Offsets gemäß dem zweiten Latenzzeitwert umfasst.

5. Vorrichtung (200) nach Anspruch 4, wobei der erste Latenzzeitwert eine erste Zahl von Taktzyklen der Verzögerung angibt, welche zu dem ersten Zeitintervallen addieren wird, und wobei der zweite Latenzzeitwert eine zweite Zahl von Taktzyklen der Verzögerung angibt, welche zu dem zweiten Zeitintervall, zu addieren sind.

6. Vorrichtung (200) nach Anspruch 5, wobei die erste Zahl an Taktzyklen einen Bruchteil eines Taktzyklus umfasst.

7. Vorrichtung (200) nach Anspruch 6, wobei mindestens einer der beiden Latenzzeitwerte Null ist.

8. Vorrichtung (200) nach Anspruch 4, wobei die Schaltkreise zum Anpassen des ersten Timing-Offsets gemäß dem ersten Latenzzeitwert ein erstes Register umfassen, um den ersten Latenzzeitwert zu speichern, und wobei die Schaltkreise zum Anpassen des zweiten Timing-Offsets gemäß dem zweiten Laterizzeitwert ein zweites Register umfassen, um den zweiten Latenzzeitwert zu speichern.

9. Vorrichtung (200) nach Anspruch 8, wobei die Freiheit einen ersten Latenzzeitwert zu speichern, welcher sich von dem zweiten Latenzzeitwert unterscheidet, die Konfigurierbarkeit der ersten Speichervorrichtung (106) etabliert, welche unabhängig von der zweiten Speichervorrichtung ist.

10. Vorrichtung (200) nach Anspruch 1, wobei die Vorrichtung ferner eine Leiterplatte mit einem Befehlsbus (104, 204), einem Datenbus (108, 206) und einer ersten und einer zweiten Speichervorrichtung (106, 110) umfasst, wobei die Leiterplatte einen Anschlussstecker aufweist, um die Vorrichtung entfernbar in eine Anschlussbuchse einführen zu können.

11. Vorrichtung (200) nach Anspruch 1, wobei die erste und zweite SpeicherVorrichtung (106, 110) Schaltkreise aufweisen, die als Reaktion auf einen Speicher-Lese-Befehl, welcher über den Befehlsbus (104, 204) übermittelt wird, jeweils erste und zweite Mengen von Schreibdatenwerten auf die erste und zweite Leitung des Datenbusses (108, 206) ausgeben,
wobei die erste Speichervorrichtung (106) unabhängig von der zweiten Speichervorrichtung (110) dafür konfigurierbar ist, einen zweiten Timing-Offset zwischen der Ankunftszeit des Speicher-Lese-Befehls und der Zeit anzupassen, zu der die erste Menge an Lesedatenwerten auf die erste Leitung des Datenbusses (108, 206) ausgegeben wird.

12. Vorrichtung (200) nach Anspruch 11, wobei die zweite Speichervorrichtung (110) unabhängig von der ersten Speichervorrichtung (106) dafür konfigurierbar ist, einen dritten Timing-Offset zwischen der Ankunftszeit des Speicher-Lese-Befehls und der Zeit anzupassen, zu der die zweite Menge an Lesedatenwerten auf die zweite Leitung des Datenbusses (108, 206) ausgegeben wird.

13. Vorrichtung (200) nach Anspruch 12, wobei die erste und die zweite Speichervorrichtung (106, 110) in Reaktion auf einen Konfigurationsbefehl, welcher über den Befehlsbus (104,204) übertragen wird, und auf jeweils einem ersten und zweiten Latenzzeitwert, welcher über die erste beziehungsweise zweite Leitung des Datenbusses (108, 206) übertragen wird, unabhängig konfigurierbar sind,
wobei die erste Speichervorrichtung (106) Schaltkreise zum Anpassen des zweiten Timing-Offsets gemäß dem ersten Latenzzeitwert umfasst, und die zweite Speichervorrichtung (110) Schaltkreise zum Anpassen des dritten Timing-Offsets gemäß dem zweiten Latenzzeitwert umfasst.

14. Vorrichtung (200) nach Anspruch 13, wobei die Schaltkreise Zum Anpassen des zweiten Timing-Offsets gemäß dem ersten Latenzzeitwert Schaltkreise aufweisen, die den ersten Timing-Offset gemäß dem ersten Latenzzeitwert anpassen; und wobei
die Schaltkreise zum Anpassen des ersten und zweiten Timing-Offsets ein Register zum Speichern des ersten Latenzzeitwerts aufweisen.

15. Vorrichtung (200) nach Anspruch 13, wobei die Schaltkreise zum Anpassen des zweiten Timing-Offsets gemäß dem ersten Latenzzeitwert ein erstes Register umfassen, um den ersten Latenzzeitwert zu speichern, und wobei die erste Speichervorrichtung (106) ein zweites Register umfasst, um den dritten Latenzzeitwert zu speichern, welcher über die erste Leitung des Datenbusses (108, 206) empfangen wurde, und wobei die Speichervorrichtung ferner Schaltkreise zum Anpassen des ersten Timing-Offset gemäß dem dritten Latenzzeitwert aufweist.

16. Vorrichtung (200) nach Anspruch 1, wobei die Vorrichtung ferner eine dritte und vierte Speichervorrichtung aufweist, welche gemeinsam an den Befehlsbus (104, 204) gekoppelt sind, um den Speicher-Schreib-Befehl zu empfangen, und welche an die erste beziehungsweise zweite Leitung des Datenbusses (108, 206) gekoppelt sind, um parallel die jeweils erste beziehungsweise zweite Portion der Schreibdatenwerte zu empfangen,
wobei die erste Speichervorrichtung (106) unabhängig von der dritten und vierten Speichervorrichtung dafür konfigurierbar ist, einen ersten Timing-Offset anzupassen, und
wobei die zweite; dritte und vierte Speichervorrichtung jeweils unabhängig dafür konfigurierbar sind, einen jeweiligen Timing-Offset zwischen der Ankunft des Speicher-Schreibbefehls und der Zeit anzupassen, zu der der Datenbus (108, 206) abgetastet wird.

17. Vorrichtung nach Anspruch 16, wobei die erste und die zweite Speichervorrichtung zu mindestens einen Teil einer ersten Reihe von Speichervorrichtungen bilden und wobei die dritte und vierte Speichervorrichtung zu mindestens einen Teil einer zweiten Reihe von Speichervorrichtungen bilden.

18. Vorrichtung (200) nach Anspruch 16, wobei eine erste gemeinsame Chip-Auswahlleitung an die erste und zweite Speichervorrichtung (106, 110) gekoppelt ist und eine zweite gemeinsame Chip-Auswahlleitung an die dritte und vierte Speichervorrichtung gekoppelt ist

19. Verfahren zum Betrieb in einem Speichermodul mit einer Vielzahl von Speichervorrichtungen (106,110), welche gekoppelt sind, um Befehle über einen gemeinsamen Befehlsbus (104, 204) zu empfangen und welche gekoppelt sind, um parallel Daten über verschiedene Leitungen eines Datenbusses (108, 206) zu empfangen, wobei das Verfahren umfasst:

Programmieren verschiedener Verzögerungszeitwerte innerhalb der Speichervorrichtungen, um Unterschiede zwischen Befehl-zu-Daten-Timirg-Offsets zu verringern, welche die Speichervorrichtungen (106, 110) aufweisen und welche wenigstens teilweise durch die physikalischen Positionen der Speichereinrichtungen (106, 110) bezüglich des gemeinsamen Befehlsbusses bedingt sind;
Empfangen eines ersten Speicher-Schreibbefehls in jedem der Speichervorrichtungen (106, 110); und
Verzögern des Abtastens der entsprechenden Schreibdaten von der entsprechende Leitung des Datenbusses (108, 206), in jeder der Speichereinrichtungen (106, 110), um mindestens den programmierten Zeitverzögerungswert, welcher dem Erhalt des ersten Speicher-Schreibbefehls folgt.

20. Verfahren nach Anspruch 19 ferner aufweisend:

Empfangen eines ersten Speicher-Lesebefehls innerhalb jeder Speichervorrichtung (106, 110); und
nach dem Empfangen des ersten Speicher-Lesebefehls, Verzögern des Ausgebens der Lesedaten, die dem ersten Speicher-Lesebefehl entsprechen, in jeder der Speichereinrichtungen (106, 110), um ein Zeitinterval, welches den programmierten Zeitverzögerungswert enthält.

21. Verfahren nach Anspruch 19, wobei das Programmieren verschiedener Zeitverzögerungswerte beinhaltet: Programmieren eines ersten Satzes von Zeitverzögerungswerten innerhalb der ersten Speichervorrichtung (106, 110) und
wobei Verzögern um mindestens den programmierten Zeitverzögerungswert beinhaltet: Verzögern für jede Speichervorrichtung (106, 110) um einen entsprechenden Zeitverzögerungswert aus dem ersten Satz von Zeitverzögerungswerten.

22. Verfahren nach Anspruch 21, wobei das Programmieren verschiedener Zeitverzögerungswerte beinhaltet Programmieren eines zweiten Satzes von Zeitverzögerungswerten innerhalb der ersten Speichervorrichtung (106, 110) und wobei das Verfahren umfasst:

Empfangen eines ersten Speicher-Lesebefehls innerhalb jeder Speichervorrichtung (106, 110); und
nach dem Empfangen des ersten Speicher-Lesebefehls, Verzögern des Ausgebens der Lesedaten, die dem ersten Speicher-Lesebefehl entsprechen, in jeder der Speichereinrichtungen (106, 110), um ein Zeitinterval, welches einen entsprechenden Zeitverzögerungswert des zweiten Satzes von Zeitverzögerungswerten enthält.

**Revendications**

1. Appareil (200) comprenant :

 un bus de commande (104, 204) ;
 un bus de données (108, 206) possédant au moins une première voie et une deuxième voie ; et
 des premier et deuxième dispositifs de mémoire (106, 110) couplés par couplage commun au bus de commande (104, 204) pour recevoir une commande d'écriture en mémoire, et couplés aux première et deuxième voies respectives du bus de données (108, 206) pour recevoir, en parallèle, des première et deuxième portions respectives d'une valeur de données d'écriture associée à la commande d'écriture en mémoire,
 dans lequel le premier dispositif de mémoire (106) est configurable, indépendamment du deuxième dispositif de mémoire (110), pour régler un premier décalage temporel entre l'arrivée de la commande d'écriture en mémoire et un instant auquel la première voie du bus de données (108, 206) est échantillonnée pour recevoir la première portion de la donnée d'écriture.

2. Appareil (200) selon la revendication 1, dans lequel un premier intervalle de temps entre l'arrivée de la commande d'écriture en mémoire et l'arrivée de la première portion de la donnée d'écriture au premier dispositif de mémoire (106) est potentiellement différent d'un deuxième intervalle de temps entre l'arrivée de la commande d'écriture en mémoire et l'arrivée de la deuxième portion de la donnée d'écriture au deuxième dispositif de mémoire (110), et dans lequel la capacité de configuration du premier dispositif de mémoire (106) indépendante par rapport au premier décalage temporel permet de compenser la différence potentielle entre les premier et deuxième intervalles de temps.

3. Appareil (200) selon la revendication 1, dans lequel le deuxième dispositif de mémoire (110) est configurable, indépendamment, du premier dispositif de mémoire (106), pour régler un deuxième décalage temporel entre l'arrivée de la commande d'écriture en mémoire et un instant auquel la deuxième voie du bus de données est échantillonnée pour recevoir la deuxième portion de la donnée d'écriture.

4. Appareil (200) selon la revendication 3, dans lequel les premier et deuxième dispositifs de mémoire (106, 110) sont configurables indépendamment en réponse à une commande de configuration transmise sur le bus de commande (104, 204) et à des première et deuxième valeurs de latence respectives transmises sur les première et deuxième voies du bus de données (108, 206), dans lequel le premier dispositif de mémoire (106) comprend un élément de circuit destiné à régler le premier décalage temporel conformément à la première valeur de latence et le deuxième dispositif de mémoire (110) comprend un élément de circuit destiné à régler le deuxième décalage temporel conformément à la deuxième valeur de latence.

5. Appareil (200) selon la revendication 4, dans lequel la première valeur de latence indique un premier nombre de cycles d'horloge de retard à ajouter au premier intervalle de temps, et dans lequel la deuxième valeur de latence indique un deuxième nombre de cycles d'horloge de retard à ajouter au deuxième intervalle de temps.

6. Appareil (200) selon la revendication 5, dans lequel le premier nombre de cycles d'horloge peut inclure une fraction d'un cycle d'horloge.

7. Appareil (200) selon la revendication 6, dans lequel au moins une parmi les première et deuxième valeurs de latence peut être zéro.

8. Appareil (200) selon la revendication 4, dans lequel l'élément de circuit destiné à régler le premier décalage temporel conformément à la première valeur de latence comprend un premier registre destiné à stocker la première valeur de latence, et dans lequel l'élément de circuit destiné à régler le deuxième décalage temporel conformément à la deuxième valeur de latence comprend un deuxième registre destiné à stocker la deuxième valeur de latence.

9. Appareil (200) selon la revendication 8, dans lequel la liberté de stocker une première valeur de latence qui est différente de la deuxième valeur de latence établit la capacité de configuration du premier dispositif de mémoire (106) qui est indépendant du deuxième dispositif de mémoire (110).

10. Appareil (200) selon la revendication 1 comprenant en outre une première carte de circuit imprimé possédant le bus de commande (104, 204), le bus de données (108, 206) et les premier et deuxième dispositifs de mémoire (106, 110) disposés dessus,

la carte de circuit imprimé possédant une broche de connexion permettant d'insérer de façon amovible l'appareil dans une broche de connexion.

11. Appareil (200) selon la revendication 1, dans lequel les premier et deuxième dispositifs de mémoire (106, 110) comprennent un élément de circuit destiné à délivrer en sortie, en réponse à une commande de lecture de mémoire transmise sur le bus de commande (104, 204), des première et deuxième portions respectives d'une valeur de données de lecture sur les première et deuxième voies du bus de données (108, 206), et
dans lequel le premier dispositif de mémoire (106) est configurable, indépendamment du deuxième dispositif de mémoire (110), pour régler un deuxième décalage temporel entre l'arrivée de la commande de lecture de mémoire et un instant auquel la première portion de la valeur de données de lecture est délivrée en sortie sur la première voie du bus de données (108, 206).

12. Appareil (200) selon la revendication 11, dans lequel le deuxième dispositif de mémoire (110) est configurable, indépendamment du premier dispositif de mémoire (106), pour régler un troisième décalage temporel entre l'arrivée de la commande de lecture de mémoire et un instant auquel la deuxième portion de la valeur de données de lecture est délivrée en sortie sur la deuxième voie du bus de données (108, 206).

13. Appareil (200) selon la revendication 12, dans lequel les premier et deuxième dispositifs de mémoire (106, 110) sont configurables indépendamment en réponse à une commande de configuration transmise sur le bus de commande (104, 204) et à des première et deuxième valeurs de latence respectives transmises sur les première et deuxième voies du bus de données (108, 206),
dans lequel le premier dispositif de mémoire (106) comprend un élément de circuit destiné à régler le deuxième décalage temporel conformément à la première valeur de latence et le deuxième dispositif de mémoire (110) comprend un élément de circuit destiné à régler le troisième décalage temporel conformément à la deuxième valeur de latence.

14. Appareil (200) selon la revendication 13, dans lequel l'élément de circuit destiné à régler le deuxième décalage temporel conformément à la première valeur de latence comprend en outre un élément de circuit destiné à régler le premier décalage temporel conformément à la première valeur de latence,
l'élément de circuit destiné à régler les premier et deuxième décalages temporels incluant un registre destiné à stocker la première valeur de latence.

15. Appareil (200) selon la revendication 13, dans lequel l'élément de circuit destiné à régler le deuxième décalage temporel inclue un registre destiné à stocker la première valeur de latence, et
dans lequel le premier dispositif de mémoire (106) comprend en outre un registre destiné à stocker une troisième valeur de latence reçue via la première voie du bus de données (108, 206) et un élément circuit destiné à régler le premier décalage temporel conformément à la troisième valeur de latence.

16. Appareil (200) selon la revendication 1 comprenant en outre des troisième et quatrième dispositifs de mémoire couplés par couplage commun au bus de commande (104, 204) pour recevoir la commande d'écriture en mémoire, et couplés aux première et deuxième voie du bus de données (108, 206), respectivement, pour recevoir, en parallèle, les première et deuxième portions respectives de la valeur de données d'écriture,
dans lequel le premier dispositif de mémoire (106) est configurable, indépendamment des troisième et quatrième dispositifs de mémoire, pour régler le premier décalage temporel, et
dans lequel chacun des deuxième, troisième et quatrième dispositifs de mémoire est de la même manière configurable indépendamment pour régler un décalage temporel respectif entre l'arrivée de la commande d'écriture en mémoire et un instant auquel le bus de données (108, 206) est échantillonné.

17. Appareil (200) selon la revendication 16, dans lequel les premier et deuxième dispositifs de mémoire (106, 110) constituent au moins une portion d'une première rangée de dispositifs de mémoire, et dans lequel les troisième et quatrième dispositifs de mémoire constituent au moins une portion d'une deuxième rangée de dispositifs de mémoire.

18. Appareil (200) selon la revendication 16, dans lequel une première ligne de sélection de puce est couplée par couplage commun aux premier et deuxième dispositifs de mémoire (106, 110) et une deuxième ligne de sélection de puce est couplée par couplage commun aux troisième et quatrième dispositifs de mémoire.

19. Procédé de fonctionnement à l'intérieur d'un module de mémoire comportant une pluralité de dispositifs de mémoire (106, 110) couplés pour recevoir des commandes via un bus de commande commun (104, 204) et couplés pour recevoir des données en parallèle via différentes voies d'un bus de données (108, 206), le procédé comprenant :

une programmation de différentes valeurs de retard temporel à l'intérieur des dispositifs de mémoire (106, 110) pour réduire des différences entre des décalages temporels entre les commandes et les données présentées par les dispositifs de mémoire (106, 110) à cause, au moins en partie, des positions physiques des dispositifs de mémoire (106, 110) par rapport au bus de commande commun (104, 204);

une réception d'une première commande d'écriture en mémoire à l'intérieur de chacun des dispositifs de mémoire (106, 110) ; et

un retardement, à l'intérieur de chacun des dispositifs de mémoire (106, 110), avec au moins la valeur de retard temporel programmée suivant la réception de la première commande d'écriture en mémoire avant d'échantillonner des données d'écriture correspondantes via la voie respective du bus de données (108, 206).

20. Procédé selon la revendication 19 comprenant en outre :

une réception d'une première commande de lecture de mémoire à l'intérieur de chacun des dispositifs de mémoire (106, 110); et

après la réception de la première commande de lecture de mémoire, un retardement, à l'intérieur de chacun des dispositifs de mémoire (106, 110), avec un intervalle de temps qui inclut la valeur de retard temporel programmée avant la délivrance en sortie d'une donnée de lecture qui correspond à la première commande de lecture de mémoire.

21. Procédé selon la revendication 19, dans lequel la programmation de différentes valeurs de retard temporel comprend la programmation d'un premier ensemble de valeurs de retard temporel à l'intérieur des dispositifs de mémoire (106, 110) et

dans lequel le retardement avec au moins la valeur de retard temporel programmée comprend, pour chacun des dispositifs de mémoire (106, 110), un retardement avec une valeur de retard temporel respective du premier ensemble de valeurs de retard temporel.

22. Procédé selon la revendication 21, dans lequel la programmation de différentes valeurs de retard temporel comprend la programmation d'un deuxième ensemble de valeurs de retard temporel à l'intérieur des dispositifs de mémoire (106, 110), le procédé comprenant en outre :

une réception d'une première commande de lecture de mémoire à l'intérieur de chacun des dispositifs de mémoire (106, 110) ; et

après la réception de la première commande de lecture de mémoire, un retardement, à l'intérieur de chacun des dispositifs de mémoire (106, 110), avec un intervalle de temps qui inclut une valeur de retard temporel respective du deuxième ensemble de valeurs de retard temporel avant la délivrance en sortie d'une donnée de lecture qui correspond à la première commande de lecture de mémoire.

FIG. 2

FIG. 1

| RANK | NATIVE WRITE LATENCY | |
| --- | --- | --- |
| | DQ0 (LANE 0) | DQ1 (LANE 1) |
| 0 | 0 | 1 |
| 1 | 0 | 0 |
| 2 | 0 | 0 |

RANK 0

RANK 1

RANK 2

**FIG. 3**

**FIG. 4**

**FIG. 5**

**FIG. 6**

EP 2 158 544 B1

| RANK | NATIVE LATENCY | |
|---|---|---|
| | DQ0 (LANE 0) | DQ1 (LANE 1) |
| 0 | 1 | 0 |
| 1 | 1 | 1 |
| 2 | 0 | 2 |

RANK 0
RANK 1
RANK 2

**FIG. 7**

| CLK | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|---|---|---|---|---|---|---|---|---|---|---|---|---|---|
| RQ | R0 | | | | R0 | | | | R1 | | | | R0 | | | | R2 | | | | R0 | | | | | | | | |
| DQ0 (LANE 0) | | RANK 0 | | RANK 0 | | RANK 1 | | RANK 0 | | RANK 2 | | | | RANK 0 | | | | | | | | | | | | | | | |
| DQ1 (LANE 1) | RANK 0 | | RANK 0 | | | RANK 1 | | RANK 0 | | | RANK 2 | | RANK 0 | | | | | | | | | | | | | | | | |

**FIG. 8**

| CLK | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|---|
| RQ | R0 | | | | R0 | | | | R1 | | | | R0 | | R2 | | | | R0 | | | | | | |
| DQ0 | | RANK 0 | | RANK 0 | | RANK 1 | | RANK 0 | | RANK 2 | | RANK 0 | | | | | | | | | | | | | |
| DQ1 | | RANK 0 | | RANK 0 | | RANK 1 | | RANK 0 | | RANK 2 | | RANK 0 | | | | | | | | | | | | | |

} 902

RANK 0

| NRL=1, ARL=0 | DQ0 | | | | | | | | | | | | | | | | | | | | | | | | |
| NRL=0, ARL=1 | DQ1 | | | | | | | | | | | | | | | | | | | | | | | | |

} 904

RANK 1

| NRL=1, ARL=0 | DQ0 | | | | | | | | | | | | | | | | | | | | | | | | |
| NRL=1, ARL=0 | DQ1 | | | | | | | | | | | | | | | | | | | | | | | | |

} 906

RANK 2

| NRL=0, ARL=2 | DQ0 | | | | | | | | | | | | | | | | | | | | | | | | |
| NRL=2, ARL=0 | DQ1 | | | | | | | | | | | | | | | | | | | | | | | | |

} 908

**FIG. 9**

FIG. 10

**FIG. 11A**

EP 2 158 544 B1

TO 1110 TO 1112 TO 1114 TO 1116

ARL ENABLE AWL ENABLE  ARL ENABLE AWL ENABLE  ARL ENABLE AWL ENABLE  ARL ENABLE AWL ENABLE

TO 1110   TO 1112   TO 1114   TO 1116

C/A BUS
1122

ARL/AWL
CONTROL
UNIT
1140

1132   1134   1136   1138

1106

LANE 0   LANE 1   LANE 2   LANE 3

DQ/DQS
BUS 1124

**FIG. 11 B**

C/A BUS 1152

DATA BUS 1154

NWL/NRL DETECTION 1156

AWL/ARL CONFIG 1158

1150

FIG. 11C

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005262323 A1
- US 6266285 B1